# FASCICULE DE BREVET EUROPEEN

(11) **EP 0 953 279 B1**
(45) Date de publication et mention de la délivrance du brevet: **26.03.2003**
(21) Numéro de dépôt: 99460030.2
(22) Date de dépôt: 28.04.1999
(51) Int. Cl.: A01C 1/04

(54) **Procédé de collage par points pour support contenant des graines de plantes**
Punktklebeverfahren für Träger mit Pflanzensamen
Punctual glueing process for support containing plant seeds

(30) Priorité: 30.04.1998 FR 9805648
(43) Date de publication de la demande: 03.11.1999
(73) Titulaire: Coudrieau, Joel, 44650 Legé (FR); Lanchier, Jean-Marc, 56400 Auray (FR)
(72) Inventeur: Coudrieau, Joel, 44650 Legé (FR); Lanchier, Jean-Marc, 56400 Auray (FR)

(56) Documents cités:
- DE-A- 1 757 655
- FR-A- 2 501 955
- US-A- 4 173 844
- US-A- 5 087 400
- PATENT ABSTRACTS OF JAPAN vol. 013, no. 442 (C-641), 3 octobre 1989 (1989-10-03) & JP 01 171404 A (KOBASHI KOGYO CO LTD;OTHERS: 02), 6 juillet 1989 (1989-07-06)

## Description

La présente invention concerne un procédé de collage entre deux films supportant des graines selon le préambule de la revendication 1, un support de grain selon le préambule de la revendication 2 et un dispositif de fabrication pour la mise en oeuvre dudit procédé selon le préambule de la revendication 7.

Le procédé de collage par points, exposé ci dessous, concerne le semis de graines de plantes sur support et plus particulièrement le semis de graines déposées entre des films dégradables à l'eau ou biodégradables, comme deux fines feuilles de papier cellulosique par exemple. Ce procédé de collage minimum permet de préserver le pouvoir germinatif des graines contenues, et d'augmenter la vitesse de production industrielle de telles nappes de semis sur support. Par extension, ce procédé peut s'appliquer aussi dans le cas où les graines sont déposées sur tout support plus épais que l'on recouvre d'un film ou d'un substrat.

On sait que ces feuilles ou supports sont destinées à maintenir des graines bien fixées à des emplacements précis, ce qui permet un écartement choisi d'une manière idéale. Comme l'ont démontré plusieurs brevets, l'intérêt d'un semis sur papier ou nappe similaire est de pouvoir placer les graines une à une précisément à des écartements réguliers pour que chaque plante ait le même espace vital, ce qui augmente le rendement, la régularité, la qualité et l'aspect esthétique en horticulture (brevet FR 2 632 251).

Mais, pour lier les deux films ou substrats, la plupart des procédés connus sont amenés, volontairement ou non, à enduire de colle ces graines, au détriment de leur pouvoir germinatif.

La présente demande de brevet propose un procédé et un dispositif permettant d'emprisonner ces graines entre les deux films et les maintenir bien en place, sans pour autant les enduire de colle. Selon l'invention, cet objectif est atteint grace à un procédé de collage et un dispositif de fabrication selon la partie caractérisante des revendications 1 et 7. A cet effet, ce collage doit se faire par des points de colle les plus petits possible et écartés le plus possible, répartis de telle sorte que les graines aient statistiquement très peu de chances d'être touchées par de la colle, contrairement à la plupart des brevets existants.

Le fait de déposer des graines, sur ou entre des films comme du papier rapidement biodégradable, est connu depuis plus de 100 ans (par exemple, brevet allemand N° 79 129).

Mais on sait que, pour bien se conserver, une graine doit être gardée au sec, au frais et pouvoir "respirer", de plus elle ne doit pas avoir été chauffée au dessus de 25°, sous peine d'être tuée ou mise en "dormance". Ensuite, pour démarrer sa germination la graine doit pouvoir s'imbiber d'eau, son orifice germinatif doit rester ouvert et ses cotylédons doivent pouvoir s'écarter pour laisser passer le germe.

Si de la colle enduit une graine, une ou plusieurs de ces conditions sont compromises, car la graine risque d'être prise dans une gangue étanche à l'air et à l'eau, ou encore, par action mécanique, elle risque de ne pas pouvoir s'ouvrir pour laisser passer le germe. De plus, l'humidité d'une colle en quantité trop importante peut provoquer une germination précoce indésirable ou obliger à un séchage énergique à chaud ce qui peut tuer la graine ou la mettre en "dormance".

On sait que le pouvoir germinatif des graines agricole, horticoles ou maraîchères de type professionnel est en général très élevé (plus de 95% pour les graines maraîchères et un peu moins pour les graines horticoles).

Mais, comme le semis idéal sur papier est effectué "graine à graine" selon des espacements choisis et une géométrie précise, pour économiser les graines et donner un même espace vital idéal à chaque plante, les moindres déficiences de germination sont très visibles et enlèvent de l'intérêt à cette technique. Il est donc important que toutes les graines aient l'environnement le plus favorable pour bien germer et ne soient pas gênées par le dispositif qui les maintient et en particulier par la colle.

A noter enfin qu'un excès de colle peu soluble dans l'eau rend le papier très difficile à percer par les germes ou les racines et qu'un excès de colle hydrosoluble se répartit dans tout le papier au premier arrosage par effet buvard, avec le risque de transformer le papier en carton trop solide pour les graines, si l'humidité n'est pas maintenue ensuite, comme en cas de sécheresse par exemple.

En conséquence, pour solidariser les deux films du support, sans que les graines ne bougent pendant les manipulations ultérieures, la colle est nécessaire, mais il faut en mettre un minimum pour espérer préserver le même pouvoir de germination que celui de graines semées classiquement en pleine terre. L'idéal serait de n'avoir aucune graine touchée par la colle (problème déjà évoqué dans le brevet allemand 1 757 655).

En effet, les procédés connus peuvent se résumer en deux groupes :
- D'une part ceux qui ne collent pas les graines (moletage de deux papiers pour en faire un ruban peu large, par exemple), mais ce procédé leur laisse trop de liberté de bouger à l'intérieur, (par exemple brevet allemand N° 191 127) et perd l'intérêt de la précision.
- D'autre part ceux qui acceptent de coller les graines elles-mêmes (dépose des graines sur des surfaces ou pistes encollées), ce qui facilite leur dépose précise "au tombé" par fixation immédiate sans possibilité de rouler ou de ricocher, mais les enduisent de colle au moins sur la face en contact comme c'est le cas avec les brevets allemands N° DE 279 745, 306 663, 474 764, 826 516, 2 124 536, 2 219 448 et surtout 2 373 218 description et revendication 1. A voir aussi les nombreux brevets américains dont US 4584790 (colle grasse) US 4414776 (colle mouillée) et US 4173844 d'origine allemande, ainsi que les brevets qui placent des points de colle sur des supports en leur présentant les graines en vrac pour qu'elles s'y collent.

Notons pour mémoire le brevet français 2 632 251 et le brevet allemand O 434 900 A1 qui proposent d'encoller des filets placés en sandwich entre deux papiers pour les solidariser. A l'étude de ces brevets, on constate quelques inconvénients :
- Dans le premier cas (moletage), le pouvoir germinatif est intact, mais les graines relativement libres peuvent bouger entre les deux papiers et la précision du semis en souffre, ce qui en enlève beaucoup d'intérêt.
- Dans le deuxième cas (collage direct sur lit de colle ou points de colle), les orifices germinatifs des graines peuvent être obturés par la colle retardant ou empêchant alors une bonne germination lors de la mise en terre, mais empêchant aussi, pendant le temps de stockage, les échanges aériens naturels de la graine, ce qui risque de l'affaiblir ou de la stériliser. De plus, le séchage d'une grande quantité de colle nécessite soit un chauffage dangereux pour les graines soit une longue ventilation en air ambiant, ce qui laisse le temps à la graine de s'imbiber d'eau et aussi ralentit la fabrication .

A noter que les procédés ayant pour origine les brevets allemands emploient plus volontiers des graines dites "enrobées" bien sphériques plus faciles à bien disposer, qui sont effectivement moins sensibles à la colle, ce qui justifie les dits procédés. En effet, comme la graine est déjà entourée d'une gangue argileuse nutritive se ramollissant à l'eau, cette gangue isole la graine nue du contact avec la colle, mais ces graines améliorées sont plus coûteuses.

Les colles habituellement utilisées dans ces nappes sont le plus souvent d'origine naturelle (amidons, dextrines, caséines, gommes, résines, etc.) ou synthétiques (vinyliques, etc.). Elles sont biodégradables à plus ou moins long terme, mais la plupart du temps elles ne sont pas encore totalement déstructurées lorsque la graine commence sa germination, ce qui peut poser problème avec de nombreuses graines de plantes annuelles (fleurs, graminées et légumes, par exemple ) qui démarrent rapidement lune fois en terre. Enfin, pour des raisons de conservation anti-moisissures, les colles naturelles contiennent souvent des conservateurs (benzoates par exemple) qui peuvent interférer avec la délicate germination.

D'autres colles sont employées à chaud pour n'apporter que très peu d'eau, mais, cette température risque aussi d'influer sur le pouvoir germinatif si elle n'est pas parfaitement maîtrisée.
Notons toutefois ici comme possibilité nouvelle, l'emploi d'une colle très rapidement soluble à l'eau genre PVA (polyvinyle alcool), qui se dissout presque instantanément au premier arrosage.

En considérant qu'un papier neutre, suffisamment fin et fragile à l'eau, ne gêne pas la germination, on voit donc que la solution idéale pour une bonne fixation sans action nocive sur la germination, serait celle qui emprisonne suffisamment chaque graine à son emplacement précis, sans qu'elle ne soit touchée par la colle, mais qu'elle ne puisse toutefois pas bouger de son emplacement par la suite lors des manipulations du support.

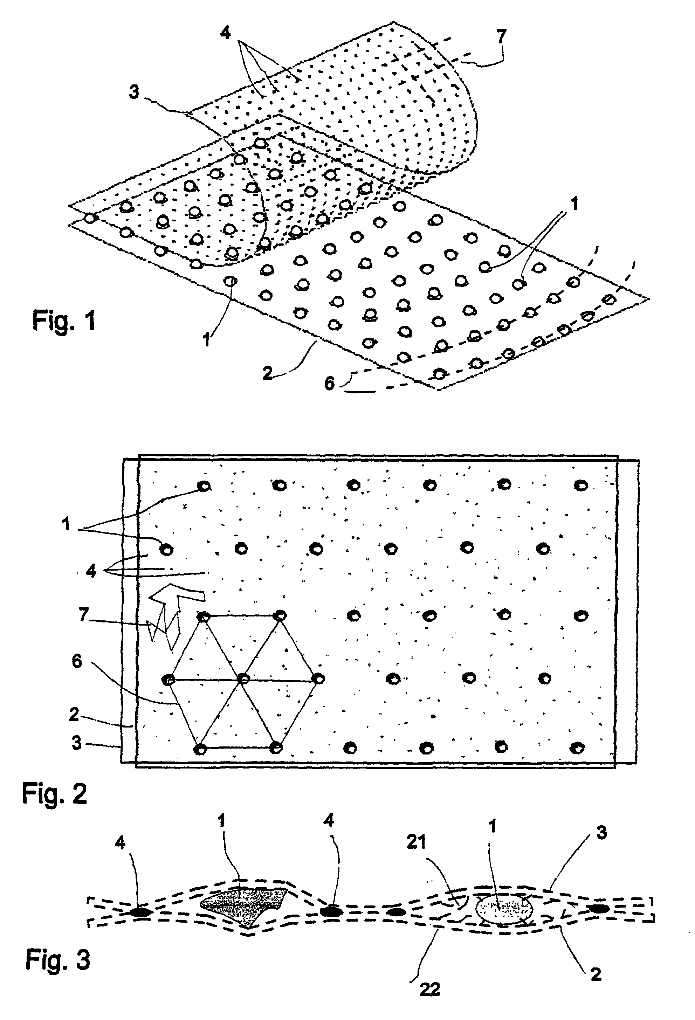

Le procédé de fabrication présenté ici (fig.1) consiste à déposer précisément en mode continu ou alternatif les graines (1) sur un papier inférieur (2) (ou film de substrat), nu et sans colle, puis à recouvrir immédiatement ce dernier d'un papier (3) (ou film de substrat) venant juste d'être encollé par un minimum de colle sous forme de points (4) aléatoirement dispersés.

En effet, lors de l'utilisation des nappes ensemencées collées par points, on constate à l'usage que, si le nombre de graines statistiquement touchées par la colle ne dépasse pas 10%, on ne diminue que très peu le pouvoir germinatif global d'origine. De plus, comme il n'y a qu'un seul des deux papiers encollé par points, on peut estimer que, même en cas coïncidence parfaite d'un point et d'une graine, l'orifice germinatif n'a au maximum qu'une chance sur deux d'être obturé (pile ou face). Par exemple, avec 10% des graines touchées, cela ramène les problèmes éventuels à moins de 5%, et descend un pouvoir germinatif nominal théorique de 95% à 90%.

Par comparaison, une graine déposée sur une piste de colle, selon les procédés connus, a environ une chance sur deux de voir son orifice de germination obturé et son pouvoir germinatif théorique descendrait de 95% à 48% (sauf pour les graines enrobées coûteuses).

Il y a deux possibilités de calcul statistique :
- Dans le cas de figures homothétiques ou d'entourages précis répétitifs, les chances de coïncidences sont théoriquement égales à zéro en calant bien au départ avec des graines déposées précisément au millimètre près.
- Dans le cas de figures différentes et incompatibles entre la géométrie des graines et des points de colle, par exemple, pour une bonne tenue, maillage des graines en triangles équilatéraux de 6 cm de côté et maillage des points de colle en carrés de 1 cm de côté disposés en diagonale, aucune coïncidence graine/colle ne peut être répétitive à cause de la non-divisibilité des valeurs "racine carrée de 2" et "racine carrée de 3" (toujours dans cet exemple). Ainsi, pour une graine, les chances d'être touchée par la colle seront purement aléatoires.

On ne risque donc pas d'avoir toute une rangée de graines affaiblies ou tuées parce qu'elles auraient toutes été enduite de colle, avec un effet répétitif à des distances régulières par coïncidences géométriques colle/graine.

Par exemple, dans le cas général de dispersion aléatoire avec 3 fois plus de points de colle que de graines, le calcul et les simulations montrent que les risques de voir une graine touchée à un endroit vital par la colle sont compris entre 3 et 7%. Avec une perte de 3%, on redescendrait au pire le pouvoir germinatif nominal de 95% à 92%, perte négligeable, surtout si l'on considère qu'elle est régulièrement répartie partout.

La description qui va suivre et qui ne présente aucun caractère limitatif doit être lue au regard des figures annexées, par lesquelles :.
- La figure 1 représente schématiquement un papier (2) sur lequel des graines (1) sont disposées précisément selon la culture désirée (dans cette figure, en arcs de cercles successifs (6), par exemple), en train de se faire recouvrir par un papier (3) encollé par points (4) disposés aux sommets de carrés (7), avant pressage des deux surfaces l'une contre l'autre. Dans ce cas précis, comme dans d'autres, il n'y a que peu de graines touchées par la colle et pas de répétitivité des coïncidences arc de cercle/carré pour des raisons d'incompatibilité géométrique.
- La figure 2 représente des graines (1) disposées au sommet de triangles équilatéraux (6) ou hexagones sur le papier inférieur (2) (disposition idéale pour un espace vital identique pour chaque graine), recouvert d'un papier supérieur (3) encollé par un mouchetis aléatoire de points de colle les plus petits possible (4) et les plus écartés possible.
- La figure 3 représente en coupe les deux couches de papier (2 et 3) pressées l'une contre l'autre par les points de colle (4), petits par rapport aux graines (1) et disposés aléatoirement . La graine de gauche est de forme anguleuse et accrocheuse par elle-même, la graine de droite plus ovoïde est mieux maintenue grâce aux fibrilles dépassantes d'un papier soyeux. Le papier dessiné en pointillés est avantageusement micro perforé et de texture toilée (22).

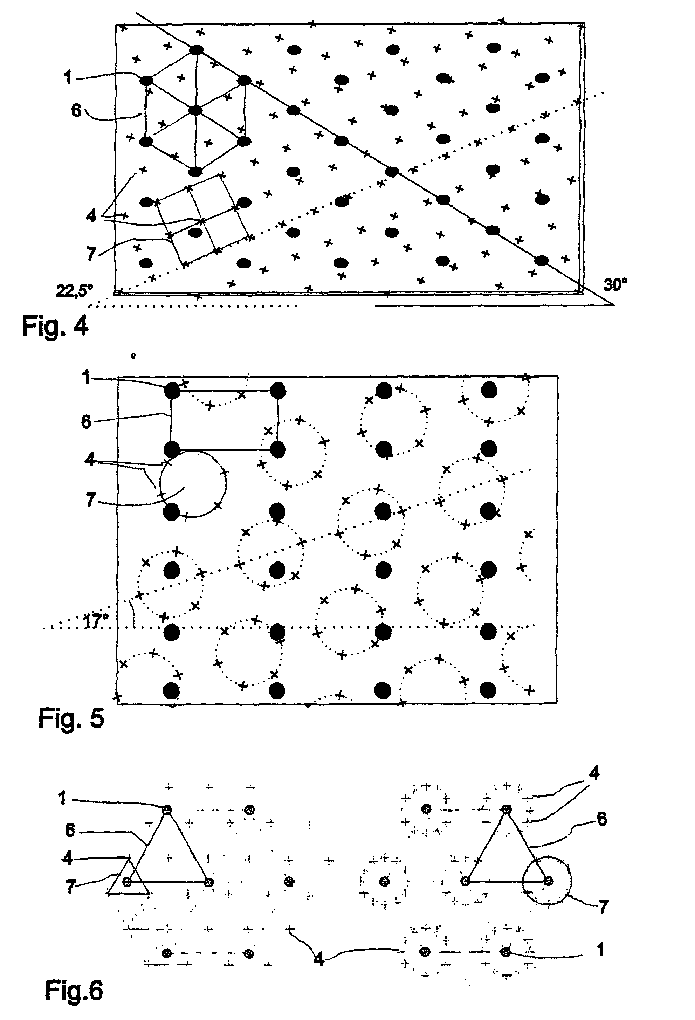

- La figure 4 montre que les maillages de graines en triangles équilatéraux (6) sont incompatibles avec les maillages de points de colle en carré (7) à condition qu'ils aient une orientation différente de 0°, 30°, 60°, 120°, etc. Ici le maillage en triangle équilatéral des graines est orienté à 30° par rapport à l'axe traversier et le maillage carré des points de colle est à 22°,5 ce qui est totalement incompatible, car dépendant de nombres n'ayant aucun diviseur commun, à savoir racine de 3 et racine de 2.
- La figure 5 montre que le maillage des points de colle placés en cercles (7) se comporte vis-à-vis des graines en maillage carré (6) comme un mouchetis parfaitement aléatoire à condition que ces cercles dépendants du nombre "pi", divisible par aucun autre nombre, soient disposés selon un angle choisi volontairement quelconque (ici 17°, par exemple) par rapport aux rangées ou lignes de graines. Cette disposition est employée en version préférentielle et se comporte comme une dispersion aléatoire des points.
- La figure 6 montre à l'inverse qu'il est possible en réglant bien la machine de production de placer toujours les points de colle autour des graines sans les toucher en employant des maillages comparables (maillage en triangles équilatéraux (7) trois fois plus petits que ceux du maillage aussi en triangles des graines (6) dans la gauche de cet exemple) ou en entourant les graines par des cercles de points de colle (18).

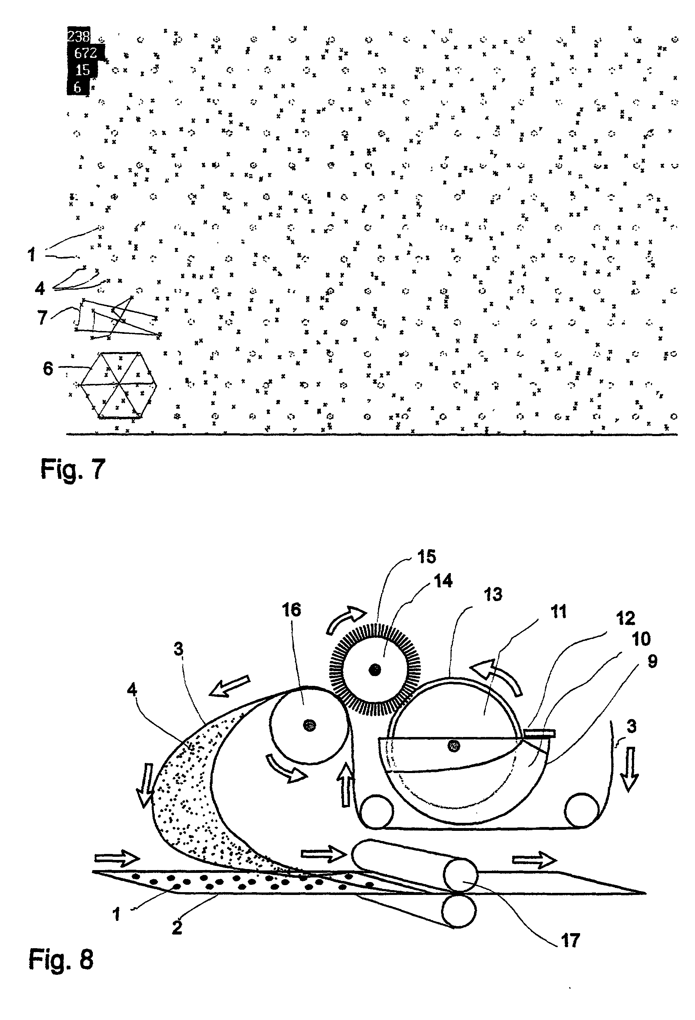

- La figure 7 montre une simulation réelle de coïncidence graine et colle, correspondant à la moyenne statistique de nombreux comptages effectués par informatique. Ici, 238 graines de diamètre non négligeable (petits cercles) ont été disposées en triangles équilatéraux et ont été mis en présence de 672 points de colle disposés aléatoirement (croix +). Le résultat moyen donne 15 graines touchées par les points de colle (6,3%), dont 6 touchées en plein centre (2,5%). A noter que cette densité est très forte et qu'en réalité, sur une surface équivalente il n'y a au plus que 20 graines soit 10 fois moins de coïncidences en plein centre .
- La figure 8 montre le dispositif de fabrication selon une version préférentielle parmi de nombreuses autres dispositions possibles : un bac (9) contenant de la colle visqueuse (10) possède un rouleau axial (11) qui s'enduit de colle en tournant. Cette dernière est limitée en épaisseur par un racleur (12) de manière à former un film régulier (13). Un rouleau intermédiaire (14) porte des picots (15) disposés selon tout dessin convenable. Un troisième rouleau guide et porte le papier de recouvrement (3) qui se recouvre alors de points de colle (4). Le papier (3) encollé par points est enfin pressé contre le papier (2) portant les gaines (1).

La justification de ce procédé fait appel au calcul statistique simple vu plus haut, démontrant l'intérêt de se servir de points de colle très visqueuse séchant vite, les plus petits possible et les plus écartés possible les uns des autres.

Cet écartement des points pour empêcher les graines de bouger, tout en évitant qu'elles soient gênées par la colle, s'optimise en fonction de quatre paramètres : le diamètre des graines, l'état de surface des graines elles-mêmes, la raideur du papier (ou film) et enfin la rugosité du papier.
- Plus la graine est grosse, plus il est possible d'écarter les points de colle sur la nappe encollée.
- Plus la graine est rugueuse ou munie de saillies, plus les points de colle pourront être écartés .
- Plus le papier est raide ou épais, moins la graine pressée entre les deux surfaces peut bouger et plus on peut écarter les points de colle.
- Plus le papier est rugueux ou muni de fibrilles de cellulose libres (peluches), ou de micro perforations, plus son pouvoir accrocheur sur les graines sera fort et plus les points de colle peuvent être écartés.
- Un moyen terme consiste à créer 4 fois plus de points de colle qu'il n'y a habituellement de graines sur une surface de semis très dense en graines : par exemple on constate à l'usage que l'on dépasse rarement 500 graines au m², ce qui donne 2000 points de colle au m², soit un point de colle tous les 5 cm², ce qui est suffisant pour bien maintenir la quasi totalité des semis. En n'utilisant que 0,10 millimètre cube de colle par point (demi sphère de colle épaisse de 0,7 mm de diamètre), on a alors une quantité totale de 200 millimètres cube de colle au m², correspondante à 1/5 de centimètre cube, c'est-à-dire moins de 0,2 g/m², quantité négligeable en nocivité potentielle.

En version préférentielle,
- les normes d'écartement convenables pour les points de colle sont comprises entre 4 fois et 30 fois le diamètre des graines.
- les normes du diamètre des points de colle, quant à eux, varient de 1/4 mm (demi sphère de 0,004 mm cube) à 1 mm (demi sphère de 0,26 mm cube) et ces diamètres sont donc de l'ordre de ceux de la majorité des graines.
- les normes de viscosité de la colle (à base de gel de dextrines d'amidon par exemple) sont proches de celles du beurre avec une très faible teneur en eau pour ne pas migrer par effet buvard sur le papier avant le séchage, lequel doit être très rapide en ventilation d'air sec (température obligatoire de moins de 25°).
- les normes de longueurs de fibres du papier consistent en des fibres courtes pour favoriser une déstructuration rapide et définitive par l'eau d'arrosage. Cela permet un passage facile des jeunes germes au travers du papier supérieur ayant perdu toute solidité. Un papier non calandré est préférable.
- les normes de raideur du papier proposent un papier assez raide pour pouvoir écarter les points de colle.
- les normes de pouvoir accrocheur par fibrilles dépassantes sont contradictoires avec le fait d'avoir des fibres courtes, mais un mélange des deux sortes de fibres (courtes et longues) est souhaitable.

En définitive, pour employer un minimum de points de colle en les écartant le plus possible, un moyen terme se démarquant des brevets antérieurs d'origine allemande, consiste à choisir, au moins pour le film du dessus, un papier fin, non calandré, non traité, pas trop mou, composé en majorité de fibres courtes et d'un peu de fibres longues soyeuses et accrocheuses. Pour une fabrication industrielle rapide, le papier doit de plus être assez solide de manière éviter les ruptures tout en étant très facilement détruit par l'eau et les micro-organismes une fois enterré. Pour cela un papier fabriqué selon la technique du pressage terminal de la pâte à papier sur toile, papier ressemblant au microscope à un filet à mailles serrées, présente de grands avantages pour la solidité, la bonne circulation de l'air et des micro-organismes, ainsi que la déstructuration immédiate à l'eau (aspect toilé, solidité longitudinale, micro-perforations, pouvoir accrocheur sur les graines)

Le dispositif de fabrication préférentiel, c'est-à-dire l'appareillage particulier permettant de délivrer un minimum de colle disposée par points est constitué en version préférentielle d'un bac à colle (9), d'un régulateur de quantité (12) et d'un répartiteur à picots (15).

Le système d'encollage comprend un bac (9) contenant une colle visqueuse (10) dans lequel tourne un cylindre (11) entraîné à la même vitesse que les feuilles de papier (2 et 3). Ce cylindre est muni d'un râcleur-doseur (12) pour régulariser l'épaisseur du film de colle (13) et un autre cylindre libre (16) est placé parallèlement à peu de distance.

Entre ces deux cylindres (11 et 16), est placé un troisième cylindre (14) qui peut toucher les deux premiers. Ce cylindre possède des picots souples (15) ou des dessins en relief souple tels qu'ils puissent prendre un minimum de colle et la déposer sur le papier secondaire (3) qui fait le tour du deuxième cylindre sec (16). La géométrie de ces picots ou dessins en relief est une de celles proposées ci dessus mais peut aussi représenter n'importe quelle figure ou être quelconque et aléatoire.

Ce papier encollé par points ou par quadrillage arrive ensuite au-dessus du premier papier horizontal (2) portant les graines et est pressé contre lui par un ou plusieurs rouleaux souples successifs (17).

Le séchage par ventilation est très rapide grâce à la très faible quantité de colle utilisée et à son faible taux d'humidité. De plus, aucune chaleur n'est nécessaire au séchage, ce qui préserve totalement le pouvoir germinatif.

Ce procédé de collage par points permet donc à la fois de fixer parfaitement les graines et de préserver au maximum leur pouvoir germinatif en respectant les impératifs suivants.

La colle employée doit :
- être très visqueuse
- être adhésive au premier contact
- ne contenir qu'une quantité très faible d'eau pour bien se former en point et ne pas s'étaler dans le papier par effet buvard
- sécher rapidement en ventilation d'air sec à température ambiante .

Les points de colle doivent être: :
- minuscules (diamètre inférieur au millimètre)
- déposés sous forme de petite demie sphère en relief

Les points de colle doivent être répartis selon :
* soit, un motif géométrique répétitif pour les points de colle, incompatible avec la disposition géométrique des graines,
* soit un motif géométrique répétitif pour les points de colle, homothétique du motif employé pour les graines (en veillant à centrer les graines au milieu des motifs en points de colle)
* soit une dispersion aléatoire régulière des points de colle par rapport à des graines placées géométriquement
* soit, inversement, un motif de points de colle géométrique, avec des graines dispersées aléatoirement,
* soit enfin une dispersion aléatoire des points de colle et des graines.

La surface du papier (ou support) doit être de préférence :
- assez raide
- rugueuse, pelucheuse, avec fibrilles ou à structure microperforée ou toilée
- aérée ou à structure microperforée ou toilée
- solide en traction

Les graines doivent être de préférence :
- à surface accrocheuse (avec angles aigus ou poils, etc.)

Le procédé, le support et le dispositif de fabrication sont destinés plus particulièrement au semis de précision entre deux films fins, comme du papier par exemple, de toutes graines nues de forme quelconque et à plus forte raison de toutes les graines régulières ou enrobées.

## Revendications

1. Procédé de collage entre deux films ou substrats biodégradables ou dégradables à l'eau, comme des fines feuilles de papier cellulosique film double constituant un support de graines destiné à maintenir entre les deux feuilles des graines de plantes, nues ou enrobées, bien fixées à des emplacements précis ou dispersées au hasard, pour y germer en traversant la couche supérieure quand la nappe est enterrée et arrosée, film double dont les deux feuilles sont reliées par collage minimal avec des petits points de colle (4) ne s'étalant pas dans le papier par effet buvard, répartis et écartés de telle sorte, que les graines (1) soient bien maintenues par la pression du papier supérieur (3) sur le papier inférieur (2), **caractérisé par le fait que** les points de colle sont disposés sur toute la surface, d'une manière aléatoire par rapport aux graines en géométrie et en nombre tels que, tout en acceptant un petit nombre de coïncidences, les graines aient statistiquement très peu de chances d'être touchées par la colle sur leur orifice de germination, de manière à préserver au maximum le pouvoir germinatif global des graines du semis

2. Support de graines obtenu par le procédé selon la revendication 1, **caractérisé par le fait que** le diamètre des points de colle (4) est moins de 1 mm pour limiter les coïncidences entre graines et points de colle et éviter de charger le papier en colle.

3. Support de graines selon la revendication 2, **caractérisé par le fait que** le maillage (7) des points de colle (4) est aléatoire par rapport au maillage des graines, cela se faisant par mouchetis au hasard avec la meilleure dispersion statistique possible et le plus grand écartement entre points de collage en rapport avec la bonne tenue des graines, pour ramener le nombre de coïncidences entre points de colle et graines à des valeurs très faibles de moins de 10%.

4. Support de graines selon la revendication 2, **caractérisé par le fait que** le maillage des points de colle est incompatible géométriquement avec le maillage des graines, par différence de figures et d'angles, et se comporte ainsi comme s'il était un mouchetis aléatoire en acceptant quelques coïncidences graine/colle à des valeurs très faibles de moins de 10%.

5. Support de graines selon l'une quelconque des revendications 2 à 4, **caractérisé par le fait que** le papier est fin, non calandré, non traité, pas trop mou, composé en majorité de fibres courtes et d'un peu de fibres longues dépassantes et accrocheuses (21), de manière à employer un minimum de points de colle (4) les plus écartés possible tout en maintenant bien les graines par la pression entre les deux couches (2 et 3) et par l'accrochage sur les rugosités ou les fibrilles.

6. Support de graines selon la revendication 5, **caractérisé par le fait que** le papier est avantageusement micro-perforé et possède une structure toilée (22) ressemblant à un filet à mailles serrées, ce qui améliore le pouvoir accrocheur sur les graines, la solidité, la bonne circulation de l'air et des micro-organismes, ainsi que le délitage immédiat à l'eau.

7. Dispositif de fabrication pour la mise en oeuvre du procédé de collage de supports de graines selon la revendication 1, **caractérisé par le fait qu'**il comprend principalement un cylindre porteur de colle (11) et un cylindre (14) possédant des picots souples (15) ou des dessins en relief souple, répartis selon une géométrie aléatoire par rapport à celle des graines, et agencé pour prendre un minimum de colle (13) sur le cylindre porteur de colle (11), puis la déposer par points sur le papier secondaire (3) destiné à être pressé ensuite sur le papier du dessous (2) portant les graines (1).

## Claims

1. Gluing process between two biodegradable or water-degradable films or substrates, such as fine sheets of cellulose paper; double film constituting a seed support intended to maintain between the two sheets of plants seeds, naked or coated, well fixed at precise places or dispersed randomly, to germinate there through the upper paper when the tablecloth is buried and sprinkled; double film whose two sheets are connected by minimal gluing with small points of glue (4) not spreading out in paper by blotter effect, distributed and spread-out in such a way, that the seeds (1) are well maintained by the higher paper (3) pressure on the lower paper (2); **characterized by** the fact that the points of glue are laid out on the whole surface, in a random way compared to seeds in geometry and in a number such as, while accepting a small number of coincidences, the seeds statistically have very few chances to be touched by the glue on their germination opening, so as to preserve to the maximum the total germinative capacity of the seeds of the sowing.

2. Seed support obtained by the process according to claim 1, **characterized by** the fact that the diameter of the glue points (4) is of less than 1 mm, to limit coincidences between seeds and glue points and to avoid loading the paper with glue.

3. Seed support according to claim 2, **characterized by** the fact that the grid (7) of the glue points (4) is random compared to the grid of seeds, this being done by roughcast randomly with best possible statistical dispersion and the greatest spacing between glue points in connection with the good maintaining of the seeds, to take the number of coincidences between glue points and seeds down to very low values of less than 10%.

4. Seed support according to claim 2, **characterized by** the fact that the grid of the glue points is geometrically incompatible with the grid of seeds, by difference of shapes and angles, and therefore behaves as if it were a random roughcast by accepting some seed/glue coincidences with very low values of less than 10%.

5. Seed support according to any of claims 2 to 4, **characterized by** the fact that paper is fine, not calendered, untreated, not too soft, composed in majority of short fibres and of a few long and hooking overreaching fibres (21), so as to use a minimum number of glue points (4) as spread-out as possible, while seeds are maintained by the pressure between the two layers (2 and 3) and by the fixing on roughnesses or the fibrillae.

6. Seed support according to claim 5, **characterized by** the fact that the paper is advantageously micro-perforated and has a canvas structure (22) resembling a narrow-mesh netting, which improves the hooking capacity on the seeds, the solidity, the good microorganism and air circulation, as well as the immediate disintegration with water.

7. Manufacture device for the implementation of the gluing process of seed supports according to claim 1, **characterized by** the fact that it includes mainly a cylinder carrying the glue and a cylinder (14) with flexible barbs (15) or drawings in flexible relief, distributed according to a random geometry compared to that of the seeds, and arranged to take a minimum quantity of glue (13) on the cylinder carrying the glue (11), then to lay it by points on the secondary paper (3) intended to be then pressed on the lower paper (2) bearing the seeds (1).

## Patentansprüche

1. Aufklebverfahrensweise zwischen zwei Filmen oder biologisch abbaubaren Substraten oder abbaubaren am Wasser, wie feine Zellulose Papierblätter; verdoppelt Film, der einen Samenträger darstellt bestimmt, zwischen den zwei Blättern Pflanzensamen (nackte oder bestrichene) aufrechtzuerhalten, die auf präzise Orte gut festgelegt sind oder aufs Geratewohl zerstreut, um dort zu keimen, die obere Schicht durchquerend, wenn das Tischtuch begraben und begossen wird; doppelter Film, dessen zwei Blätter durch minimales Aufkleben verbunden sind mit kleinen Klebstoffpunkten (4), die sich im Papier ausbreiten durch Löschblattwirkung verteilt, und von solcher Art entlegen, daß die Samen (1) bleiben gut durch den Druck des oberen Papiers aufrechterhalten (3) auf dem unteren Papier (2); charakterisiert durch die Tatsache, daß die Klebstoffpunkte auf der ganzen Oberfläche angeordnet sind, über eine verfügt Zufallsart hinsichtlich der Samen in Geometrie und in Zahl wie, indem man eine kleine Anzahl von Zufällen akzeptiert, die Samen haben statistisch sehr wenig Chancen durch den Klebstoff auf ihrer Keimensmündung berührt zu sein, so daß die globale Keimmacht den Samen des Aussaats am Höchsten bewahren ist.

2. Samenträger, der durch die Verfahrensweise nach der Forderung 1 erhalten wurde, charakterisiert durch die Tatsache, daß der Durchmesser der Klebstoffpunkte (4) beträgt weniger als 1 mm, um die Zusammentreffen zwischen Samen und Klebstoffpunkte zu begrenzen, und zu vermeiden, das Papier in Klebstoff zu beladen.

3. Samenträger nach Forderung 2, charakterisiert durch die Tatsache, daß die Maschenöffnung (7) der Klebstoffpunkte (4) hinsichtlich der Maschenöffnung der Samen zufallsbedingt ist, die sich von mouchetis aufs Geratewohl macht, mit der besten möglichen statistischen Zerstreuung, und das größte Auseinandergehen zwischen Klebstoffpunkten in Bericht mit dem guten Verhalten der Samen, um die Zahl von Zufällen zwischen Klebstoffpunkten und Samen an sehr schwachen Werten von weniger als 10% zurückzubringen.

4. Samenträger nach Forderung 2, charakterisiert durch die Tatsache, daß die Maschenöffnung der Klebstoffpunkte mit der Maschenöffnung der Samen geometrisch unvereinbar ist, durch Unterschied in Darstellungen und Winkeln, und dann sich verhält, als ob es ein Zufallsmouchetis wäre, indem man einige Samen/Klebstoff Zufälle an sehr schwachen Werten von weniger als 10% akzeptiert.

5. Samenträger nach irgendeiner Forderung 2 bis 4, charakterisiert durch die Tatsache, daß das Papier fein ist, nicht registriert, nicht chemisch behandelt, nicht zu mild, hauptsächlich vorwiegend von kurzen Fasern, und von ein bisschen langen, überschreitenden und befestigenden Fasern (21), um sich ein Minimum entlegensten Klebstoffpunkten zu gebrauchen (4), indem man die Samen durch den Druck zwischen den zwei Schichten (2 und 3) und durch das Befestigen auf den Rauheiten oder den Fäserchen gut aufrechterhält.

6. Samenträger nach Forderung 5, charakterisiert durch die Tatsache, daß das Papier vorteilhaft mikro-perforiert ist, und besitzt eine Segeltuchstruktur (22), die einem Maschennetz dicht ähnelt, was verbessert die Schwindlermacht auf den Samen, die Festigkeit, die gute Luft- und Mikroorganismuszirkulation, und das unmittelbare Wasserabbaubaren.

7. Herstellungsvorrichtung für die Umsetzung der Aufklebverfahrensweise von Samenträgern nach Forderung 1, charakterisiert durch die Tatsache, daß es hauptsächlich umfaßt einen Klebstoffträgerzylinder und ein Zylinder (14), der besitzt flexible Picots (15) oder Zeichnungen in flexiblem Relief, verteilt nach einer Zufallsgeometrie hinsichtlich jener den Samen, und angeordnet um ein Minimum Klebstoff (13) auf dem Klebstoffträgerzylinder (11) zu nehmen, dann diesen nach Punkten auf dem sekundären Papier (3) abzulegen, das danach auflegt sein soll auf dem Papier der Unterseite (2), das die Samen trägt (1).
